# EUROPÄISCHE PATENTSCHRIFT

(11) **EP 2 959 766 B1**
(45) Veröffentlichungstag und Bekanntmachung des Hinweises auf die Patenterteilung: **12.06.2019**
(21) Anmeldenummer: 15162315.4
(22) Anmeldetag: 02.04.2015
(51) Int. Cl.: A01D 43/08

(54) **ERNTEMASCHINE UND BETRIEBSVERFAHREN DAFÜR**
HARVESTER AND METHOD OF OPERATING SAME
MOISSONNEUSE ET SON PROCÉDÉ DE FONCTIONNEMENT

(30) Priorität: 27.06.2014 DE 102014109064
(43) Veröffentlichungstag der Anmeldung: 30.12.2015
(73) Patentinhaber: CLAAS Saulgau GmbH, 88348 Bad Saulgau (DE)
(72) Erfinder: Bönig, Ingo, Dr., 33330 Gütersloh (DE)

(56) Entgegenhaltungen:
- EP-A1- 1 894 463
- DE-A1- 19 802 199
- US-A- 2 720 424
- US-A1- 2006 019 732
- US-A1- 2009 113 868

## Beschreibung

Die Erfindung betrifft eine Erntemaschine, wie beispielsweise einen Feldhäcksler oder einen Mähdrescher, mit einem länglichen Auswurfkrümmer, der mit einem Längsende dessen so an einer Oberseite der Erntemaschine montiert ist, dass der Auswurfkrümmer an dem einen Längsende um eine vertikale Drehachse und um eine horizontale Achse beweglich gelagert ist, wobei der Auswurfkrümmer durch Drehen um die vertikale Drehachse so ausrichtbar ist, dass sich der Auswurfkrümmer seiner Länge nach in einer Front-Heck-Richtung der Erntemaschine erstreckt, und ein Betriebsverfahren für eine solche Erntemaschine.

Eine Erntemaschine der eingangsgenannten Art ist z.B. aus EP 2 020 176 B1 bekannt. Diese Erntemaschine hat einen länglichen Auswurfkrümmer, der mit einem Längsende dessen so an einer Oberseite der Erntemaschine montiert ist, dass der Auswurfkrümmer an dem einen Längsende um eine vertikale Drehachse und um eine horizontale Achse beweglich gelagert ist. Dabei kann der Auswurfkrümmer zum Erzielen einer Transportstellung für die Straßenfahrt durch um die vertikale Drehachse Drehen so ausgerichtet werden, dass sich der Auswurfkrümmer seiner Länge nach in einer Front-Heck-Richtung der Erntemaschine erstreckt.

Das eine Längsende des Auswurfkrümmers ist dabei über ein Gelenk so an der Oberseite der Erntemaschine montiert, dass der Auswurfkrümmer um eine quer zu einer Längsrichtung des Auswurfkrümmers verlaufende horizontale Schwenkachse schwenkbeweglich gelagert ist. Auf diese Weise kann der Auswurfkrümmer zum Erzielen der Transportstellung für die Straßenfahrt durch um die horizontale Schwenkachse Schwenken so abgesenkt werden, dass er nicht nach oben über eine Fahrerkabine der Erntemaschine hinaus vorsteht. Dabei ist das Ausmaß einer möglichen Höhenabsenkung des Auswurfkrümmers u.a. von dessen Krümmung und von einer Länge der Erntemaschine abhängig.

Da für eine Straßenfahrt eine bestimmte Gesamthöhenabmessung der Erntemaschine (wie derzeit z.B. 4 Meter) nicht überschritten werden darf, ist somit die Konfiguration des Auswurfkrümmers, insbesondere dessen Krümmung und somit dessen Auswurfparabel für das Erntegut, gewissen Beschränkungen unterworfen.

Die Druckschrift DE 198 02 199 A2 betrifft eine zweiteilige Entleervorrichtung eines Mähdreschers, die ein geradlinig ausgebildetes Teilstück aufweist, das drehbar an dem zweiten Teilstück befestigt ist. Das zweite Teilstück ist um eine sich parallel zur Maschinenlängsachse erstreckende Drehachse drehbar am Korntank befestigt. Durch Drehen der Entleervorrichtung um die Drehachse ist diese von einer Transportposition in eine Arbeitsposition verschwenkbar, in der das zweite Teilstück die Maschine überragt.

Der Erfindung liegt die Aufgabe zugrunde, eine gemäß dem Oberbegriff des Anspruchs 1 ausgebildete Erntemaschine bereitzustellen, deren Auswurfkrümmer mit geringeren Beschränkungen zum Erzielen einer Transportstellung ausrichtbar ist. Der Erfindung liegt außerdem die Aufgabe zugrunde, ein Betriebsverfahren für eine solche Erntemaschine bereitzustellen, um den Auswurfkrümmer aus einer Betriebsstellung dessen in seine Transportstellung zu verbringen.

Die o.g. Aufgaben der Erfindung werden mit einer Erntemaschine gemäß Anspruch 1 bzw. mit einem Betriebsverfahren gemäß Anspruch 8 gelöst. Weiterbildungen der erfindungsgemäßen Erntemaschine sind in den abhängigen Ansprüchen definiert.

Gemäß der Erfindung wird bereitgestellt eine insbesondere selbstfahrende Erntemaschine, wie beispielsweise ein Feldhäcksler oder ein Mähdrescher, mit einem länglichen Auswurfkrümmer, der mit einem Längsende dessen so an einer Oberseite der Erntemaschine montiert ist, dass der Auswurfkrümmer an dem einen Längsende um eine vertikale Drehachse und um eine horizontale Achse beweglich gelagert ist. Der Auswurfkrümmer ist durch Drehen um die vertikale Drehachse so ausrichtbar, dass sich der Auswurfkrümmer seiner Länge nach in einer Front-Heck-Richtung der Erntemaschine erstreckt.

Bei der erfindungsgemäßen Erntemaschine ist das eine Längsende des Auswurfkrümmers so an der Oberseite der Erntemaschine montiert, dass der Auswurfkrümmer um eine in einer Längsrichtung des Auswurfkrümmers verlaufende horizontale Drehachse drehbeweglich gelagert ist. Mit anderen Worten verläuft gemäß der Erfindung die horizontale Drehachse bei sich seiner Länge nach in Front-Heck-Richtung der Erntemaschine erstreckendem Auswurfkrümmer ebenfalls in Front-Heck-Richtung der Erntemaschine.

Durch um die horizontale Drehachse Drehen des Auswurfkrümmers kann dieser ohne Beschränkung durch die Länge der Erntemaschine zum Erzielen einer Transportstellung ausgerichtet werden.

Die Erntemaschine zeichnet sich dadurch aus, dass der Auswurfkrümmer eine Krümmung aufweist, wobei der Auswurfkrümmer um die horizontale Drehachse zwischen einer Betriebsstellung, in der ein Innenradius der Krümmung des Auswurfkrümmers nach vertikal unten weist, und einer Außerbetriebsstellung drehbewegbar ist, in der der Innenradius der Krümmung des Auswurfkrümmers um 90 Grad gedreht in die Horizontale weist.

Somit kann der Auswurfkrümmer zum Erzielen der Transportstellung einfach um 90 Grad um die in Längsrichtung des Auswurfkrümmers verlaufende horizontale Drehachse in seine Außerbetriebsstellung gedreht bzw. seitlich gekippt werden, in der sich die Krümmung in Breitenrichtung der Erntemaschine erstreckt. Auf diese Weise ist das Ausmaß einer möglichen Höhenabsenkung des Auswurfkrümmers nicht mehr von dessen Krümmung und oder von der Länge der Erntemaschine abhängig. Dadurch ist wiederum die Konfiguration des Auswurfkrümmers, insbesondere dessen Krümmung und somit dessen Auswurfparabel für das Erntegut, keinen Beschränkungen zur Einhaltung einer Gesamthöhenabmessung der Erntemaschine mehr unterworfen und kann frei erntegutflusstechnisch und hinsichtlich der Energieeffizienz optimiert werden.

Gemäß der Erfindung kann die Erntemaschine einen Drehkranz aufweisen, mit dem das eine Längsende des Auswurfkrümmers verbunden ist, wobei der Drehkranz an der Oberseite der Erntemaschine so angeordnet ist, dass er die vertikale Drehachse für den Auswurfkrümmer bereitstellt.

Gemäß einer Ausführungsform der Erfindung ist der Drehkranz so eingerichtet, dass er zusätzlich zur vertikalen Drehachse auch die horizontale Drehachse für den Auswurfkrümmer bereitstellt. Alternativ dazu kann der Auswurfkrümmer einen Krümmerfuß aufweisen, welcher direkt an den Drehkranz montiert ist, so dass der Krümmerfuß um die durch den Drehkranz bereitgestellte vertikale Drehachse drehbar ist, und in welchen ein Drehgelenk integriert ist, das die horizontale Drehachse für den Auswurfkrümmer bereitstellt.

Gemäß noch einer Ausführungsform der Erfindung weist der Auswurfkrümmer ein längliches erstes Teilstück, welches eine Krümmung hat und welches um die vertikale Drehachse und um die horizontale Drehachse drehbar an der Erntemaschine montiert ist, und ein längliches zweites Teilstück auf, welches um eine Schwenkachse schwenkbar an einem der Erntemaschine abgewandten Längsende des ersten Teilstücks montiert ist, so dass das zweite Teilstück zwischen einer ausgeklappten Stellung, in der sich das zweite Teilstück als Längenfortsetzung des ersten Teilstücks erstreckt, und einer eingeklappten Stellung verschwenkbar ist, in der das zweite Teilstück längsseits neben dem ersten Teilstück angeordnet ist.

Mit dieser Ausgestaltung der Erfindung können besonders lange Auswurfkrümmer zum Erzielen der Transportstellung vorteilhaft der Länge nach zusammengeklappt werden, so dass in der Transportstellung das Ausmaß eines über die Erntemaschine hinaus Vorstehens des Auswurfkrümmers reduziert ist.

Gemäß einer weiteren Ausführungsform der Erfindung ist die Schwenkachse so ausgerichtet, dass das zweite Teilstück zum Realisieren der eingeklappten Stellung auf die Krümmung des ersten Teilstücks verschwenkbar ist. Auf diese Weise kann, wenn der Auswurfkrümmer um die horizontale Drehachse in die Außerbetriebsstellung gedreht ist, zum Erzielen der Transportstellung bei einem besonders langen Auswurfkrümmer vorteilhaft die Breite der Erntemaschine zum Verstauen des zweiten Teilstücks genutzt werden. Damit kann auch bei einem besonders langen Auswurfkrümmer eine bezüglich der Einhaltung einer Gesamthöhenabmessung für die Straßenfahrt zu sehende Beschränkung von dessen Konfiguration vermieden werden.

Gemäß noch einer weiteren Ausführungsform der Erfindung ist die Schwenkachse aufseiten eines Innenradius der Krümmung des ersten Teilstücks angeordnet, so dass das zweite Teilstück zum Realisieren der eingeklappten Stellung in den Innenradius der Krümmung des ersten Teilstücks verschwenkbar ist. Die Nutzung des Innenradius der Krümmung des ersten Teilstücks zum Verstauen des zweiten Teilstücks ist besonders platzsparend.

Gemäß noch einer Ausführungsform der Erfindung weist die Erntemaschine von einem Straßenaufstandspunkt dieser bis zur Oberseite eine solche Höhenabmessung auf und ist der Auswurfkrümmer hinsichtlich seiner Krümmung und seiner Länge so konfiguriert, dass eine durch den Auswurfkrümmer in dessen Betriebsstellung definierte Gesamthöhenabmessung der Erntemaschine größer als 4 Meter ist. Bei dieser Ausgestaltung der Erntemaschine lässt sich das um die horizontale Drehachse Drehen des Auswurfkrümmers besonders vorteilhaft zum Erzielen der Transportstellung einsetzen.

Gemäß der Erfindung wird auch bereitgestellt ein Betriebsverfahren für eine Erntemaschine gemäß einer, mehreren oder allen zuvor beschriebenen Ausführungsformen der Erfindung in jeder denkbaren Kombination, um den Auswurfkrümmer aus der Betriebsstellung in die Transportstellung zu verbringen. Gemäß der Erfindung weist das Betriebsverfahren zumindest die Schritte auf: Drehen des Auswurfkrümmers um ein bestimmtes Ausmaß um die vertikale Drehachse, so dass der Auswurfkrümmer sich seiner Länge nach in Front-Heck-Richtung der Erntemaschine erstreckt; und Drehen des Auswurfkrümmers um 90 Grad um die horizontale Drehachse, so dass der Innenradius der Krümmung des Auswurfkrümmers in die Horizontale weist.

Da dem erfindungsgemäßen Betriebsverfahren die oben mit Bezug auf den erfindungsgemäßen Auswurfkrümmer genannten Vorteile gemein sind, brauchen diese in gleicher Weise für das Betriebsverfahren geltend hier nicht wiederholt werden.

Im Folgenden wird die Erfindung anhand einer bevorzugten Ausführungsform und unter Bezugnahme auf die beigefügten Figuren beschrieben.
- Fig.1: zeigt eine schematische Seitenansicht einer mit einem Auswurfkrümmer versehenen Erntemaschine gemäß einer Ausführungsform der Erfindung.
- Fig.2: zeigt eine vereinfachte perspektivische Teilansicht der Erntemaschine von Fig. 1 mit dem Auswurfkrümmer in einer Transportstellung.

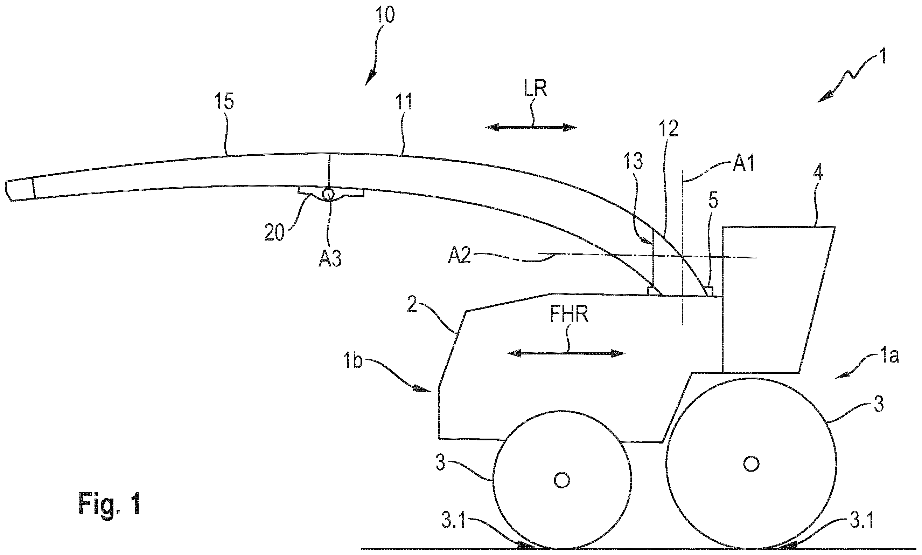

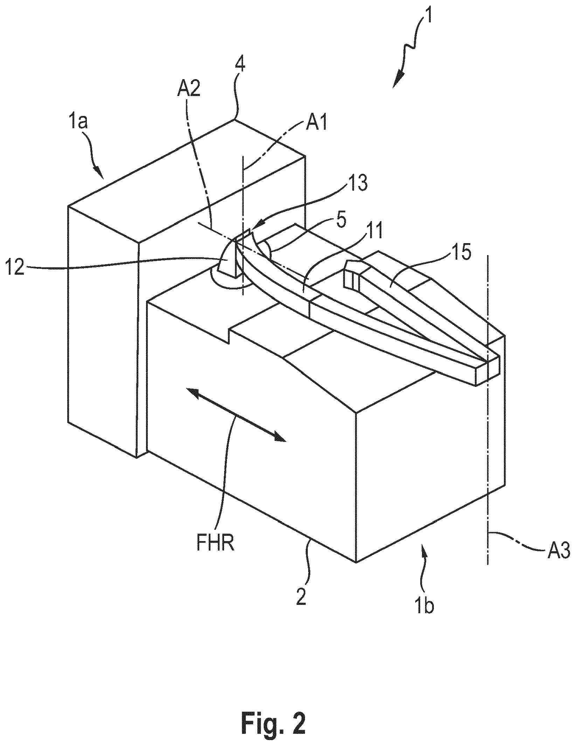

Im Folgenden wird unter Bezugnahme auf die Figuren 1 und 2 eine selbstfahrende Erntemaschine 1 gemäß einer Ausführungsform der Erfindung beschrieben werden. Gemäß der beschriebenen Ausführungsform ist die Erntemaschine beispielhaft als selbstfahrender Feldhäcksler ausgebildet.

Fig. 1 zeigt die Erntemaschine 1 in schematischer Seitenansicht. Ein Maschinengehäuse 2 der Erntemaschine 1 enthält einen Motor (nicht gezeigt) zum Antreiben von Rädern 3 sowie eines an einer Frontseite 1a der Erntemaschine 1 montierbaren Erntevorsatzes (nicht gezeigt). Mit Hilfe des Erntevorsatzes vom Boden aufgenommenes Erntegut wird in einer im Innern des Maschinengehäuses 2 angeordneten Häckseltrommel (nicht gezeigt) zerkleinert und in einen hinter einer Fahrerkabine 4 aufsteigenden Auswurfschacht (nicht gezeigt) ausgegeben. Ein ebenfalls an dem Auswurfschacht im Innern des Maschinengehäuses 2 angeordneter Nachbeschleuniger (nicht gezeigt) schleudert das gehäckselte Erntegut durch einen länglichen Auswurfkrümmer 10, welcher das zerkleinerte Erntegut zum Weitertransport z.B. auf eine Ladefläche eines Transporthängers (nicht gezeigt) aufgibt.

Der Auswurfkrümmer 10 ist mit einem Längsende dessen so an der Oberseite des Maschinengehäuses 2 der Erntemaschine 1 montiert, dass der Auswurfkrümmer 10 an dem einen Längsende um eine vertikale Drehachse A1 und um eine in einer Längsrichtung LR des Auswurfkrümmers 10 verlaufende horizontale Drehachse A2 drehbeweglich gelagert ist.

Genauer weist der Auswurfkrümmer 10 ein längliches erstes Teilstück 11 auf, welches eine Krümmung hat und welches um die vertikale Drehachse A1 und um die horizontale Drehachse A2 drehbar an der Oberseite des Maschinengehäuses 2 der Erntemaschine 1 montiert ist. Zu diesem Zweck weist die Erntemaschine 1 einen Drehkranz 5 auf, mit dem das von dem ersten Teilstück 11 gebildete eine Längsende des Auswurfkrümmers 10 verbunden ist. Der Drehkranz 5 ist dabei so an der Oberseite des Maschinengehäuses 2 der Erntemaschine 1 angeordnet, dass er die vertikale Drehachse A1 für den Auswurfkrümmer 10 bereitstellt.

Außerdem weist der Auswurfkrümmer 10 einen Krümmerfuß 12 auf, welcher direkt an den Drehkranz 5 montiert ist, so dass der Krümmerfuß 12 um die durch den Drehkranz 5 bereitgestellte vertikale Drehachse A1 drehbar ist, und in welchen ein Drehgelenk 13 integriert ist, das die horizontale Drehachse A2 für den Auswurfkrümmer 10 bereitstellt. Das dem Krümmerfuß 12 zugewandte eine Längsende des ersten Teilstücks 11 ist wiederum direkt an das Drehgelenk 13 des Krümmerfußes 12 montiert.

Der Auswurfkrümmer 10 weist außerdem ein längliches zweites Teilstück 15 auf, welches über ein Schwenkgelenk 20 schwenkbar an einem dem Drehkranz 5 der Erntemaschine 1 abgewandten Längsende des ersten Teilstücks 11 montiert. Das Schwenkgelenk 20 stellt eine Schwenkachse A3 bereit, so dass das zweite Teilstück 15 um die Schwenkachse A3 zwischen einer in Fig. 1 gezeigten ausgeklappten Stellung, in der sich das zweite Teilstück 15 als Längenfortsetzung des ersten Teilstücks 11 erstreckt, und einer in Fig. 2 gezeigten eingeklappten Stellung verschwenkbar ist, in der das zweite Teilstück 15 längsseits neben dem ersten Teilstück 11 angeordnet ist.

In diesem Zusammenhang ist zu erwähnen, dass der Auswurfkrümmer 10 in seiner ausgeklappten Stellung durch um die vertikale Drehachse A1 Drehen des ersten Teilstücks 11 gegenüber der Erntemaschine 1 zwischen der in Fig. 1 gezeigten Position, in welcher sich der Auswurfkrümmer 10 zum Erzielen seiner Transportstellung seiner Länge nach in einer Front-Heck-Richtung FHR der Erntemaschine 1 über eine Heckseite 1b der Erntemaschine 1 hinaus erstreckt, und einer Arbeitsposition verlagerbar ist, in welcher der Auswurfkrümmer 10 z.B. quer zur Front-Heck-Richtung FHR der Erntemaschine 1 seitlich von dieser vorsteht.

Wie aus Fig. 1 ersichtlich, verläuft die horizontale Drehachse A2 bei sich seiner Länge nach in Front-Heck-Richtung FHR der Erntemaschine 1 erstreckendem Auswurfkrümmer 10 ebenfalls in Front-Heck-Richtung FHR der Erntemaschine 1.

Wie aus den Figuren 1 und 2 ersichtlich, ist die Schwenkachse A3 des Schwenkgelenks 20 so ausgerichtet, dass das zweite Teilstück 15 zum Realisieren der eingeklappten Stellung auf die Krümmung des ersten Teilstücks 11 verschwenkbar ist. Genauer ist das Schwenkgelenk 20 so angeordnet, dass sich die Schwenkachse A3 aufseiten eines Innenradius der Krümmung des ersten Teilstücks 11 befindet, so dass das zweite Teilstück 15 zum Realisieren der eingeklappten Stellung wie in Fig. 2 gezeigt in den Innenradius der Krümmung des ersten Teilstücks 11 verschwenkbar ist.

Durch die Krümmung des ersten Teilstücks 11 und ggf. eine Krümmung des zweiten Teilstücks 15 weist der Auswurfkrümmer 10 in seiner Gesamtheit eine Krümmung auf. Durch die horizontale Drehachse A2 ist der Auswurfkrümmer 10 zwischen einer in Fig. 1 gezeigten Betriebsstellung, in der ein Innenradius der Krümmung des Auswurfkrümmers 10 nach vertikal unten weist, und einer in Fig. 2 gezeigten Außerbetriebsstellung drehbewegbar, in der der Innenradius der Krümmung des Auswurfkrümmers um 90 Grad gedreht in die Horizontale weist. Dabei erstreckt sich die Schwenkachse A3 des Schwenkgelenks 20 in der Betriebsstellung horizontal und quer zur Front-Heck-Richtung FHR und in der Außerbetriebsstellung vertikal.

Die Erntemaschine 1 weist gemäß dieser Ausführungsform von einem durch ihre Räder 3 jeweils definierten Straßenaufstandspunkt 3.1 bis zur Oberseite des Maschinengehäuses 2 eine solche Höhenabmessung auf und der Auswurfkrümmer 10 ist hinsichtlich seiner Krümmung und seiner Länge so konfiguriert, dass durch den Auswurfkrümmer 10 eine Gesamthöhenabmessung der Erntemaschine 1 von größer als 4 Meter definiert wird, wenn sich der Auswurfkrümmer 10 in der Betriebsstellung und der ausgeklappten Stellung befindet. Da eine solche Gesamthöhenabmessung der Erntemaschine 1 für eine Straßenfahrt der Erntemaschine 1 unzulässig ist, wird der Auswurfkrümmer 10 für die Straßenfahrt in die in Fig. 2 gezeigte Transportstellung verbracht.

Ausgehend von der o.g. Arbeitsposition, in welcher sich der Auswurfkrümmer 10 in seiner Betriebsstellung und in der ausgeklappt Stellung befindet, oder einer Zwischenposition zwischen der Arbeitsposition und der in Fig. 1 gezeigten Position wird zum Erzielen der Transportstellung der Auswurfkrümmer 10 zunächst um ein bestimmtes Ausmaß (je nach Drehposition des Auswurfkrümmers 10 bezüglich der vertikalen Drehachse A1) um die vertikale Drehachse A1 gedreht, so dass der Auswurfkrümmer 10 sich seiner Länge nach in Front-Heck-Richtung FHR der Erntemaschine 1 erstreckt, wie in Fig. 1 gezeigt. Danach wird der Auswurfkrümmer 10 um 90 Grad um die horizontale Drehachse A2 in die Außerbetriebsstellung gedreht, so dass der Innenradius der Krümmung des Auswurfkrümmers 10 in die Horizontale weist.

Schließlich wird das zweite Teilstück 15 des Auswurfkrümmers 10 um die sich nun vertikal erstreckende Schwenkachse A3 um etwa 180 Grad zum ersten Teilstück 11 des Auswurfkrümmers 10 hin in die eingeklappte Stellung geschwenkt, so dass sich beide Teilstücke 11, 15 des Auswurfkrümmers 10 in etwa parallel zur Front-Heck-Richtung FHR der Erntemaschine 1 längsseits nebeneinander angeordnet heckwärts bzw. über die Heckseite 1b der Erntemaschine 1 hinaus erstrecken, wie in Fig. 2 gezeigt. Nun ist die Transportstellung des Auswurfkrümmers 10 realisiert. Bevorzugt liegt der Auswurfkrümmer 10 in der Transportstellung auf der Oberseite des Maschinengehäuses 2 auf, so dass er vertikal abgestützt ist.

Um die Erntemaschine 1 schnell für unterschiedliches Erntegut wie Gras und Mais umrüsten zu können, ist das Schwenkgelenk 20 bevorzugt so ausgebildet, dass das zweite Teilstück 15 des Auswurfkrümmers 10 einfach demontiert werden und durch ein nicht gezeigtes anderes zweites Teilstück (z.B. anderer Länge und/oder anderer Krümmung) ersetzt werden kann. Zu diesem Zweck können vorteilhaft mehrere unterschiedliche zweite Teilstücke für den Auswurfkrümmer 10 an der Erntemaschine 1 mitgeführt werden.

Abschließend bleibt noch zu bemerken, dass gemäß einer nicht gezeigten Modifikation der Erntemaschine 1 der Drehkranz 5 auch so eingerichtet sein kann, dass er zusätzlich zur vertikalen Drehachse A1 auch die horizontale Drehachse A2 für den Auswurfkrümmer 10 bereitstellt. In diesem Fall kann der Krümmerfuß 12 mit dem Drehgelenk 13 entfallen und ist das erste Teilstück 11 direkt an ein in den Drehkranz 5 integriertes Drehgelenk zur Bereitstellung der horizontalen Drehachse A2 montiert.

### Bezugszeichenliste

- 1: Erntemaschine
- 1a: Frontseite
- 1b: Heckseite
- 2: Maschinengehäuse
- 3: Räder
- 3.1: Straßenaufstandspunkt
- 4: Fahrerkabine
- 5: Drehkranz
- 10: Auswurfkrümmer
- 11: erstes Teilstück
- 12: Krümmerfuß
- 13: Drehgelenk
- 15: zweites Teilstück
- 20: Schwenkgelenk
- A1: vertikale Drehachse
- A2: horizontale Drehachse
- A3: Schwenkachse
- FHR: Front-Heck-Richtung
- LR: Längsrichtung

## Patentansprüche

1. Erntemaschine (1) mit einem länglichen Auswurfkrümmer (10), der mit einem Längsende dessen so an einer Oberseite der Erntemaschine (1) montiert ist, dass der Auswurfkrümmer (10) an dem einen Längsende um eine vertikale Drehachse (A1) und um eine horizontale Achse beweglich gelagert ist, wobei der Auswurfkrümmer (10) durch Drehen um die vertikale Drehachse (A1) so ausrichtbar ist, dass sich der Auswurfkrümmer (10) seiner Länge nach in einer Front-Heck-Richtung (FHR) der Erntemaschine (1) erstreckt, wobei das eine Längsende des Auswurfkrümmers (10) so an der Oberseite der Erntemaschine (1) montiert ist, dass der Auswurfkrümmer (10) um eine in einer Längsrichtung (LR) des Auswurfkrümmers (10) verlaufende horizontale Drehachse (A2) drehbeweglich gelagert ist, **dadurch gekennzeichnet, dass**
der Auswurfkrümmer (10) eine Krümmung aufweist und um die horizontale Drehachse (A2) zwischen einer Betriebsstellung, in der ein Innenradius der Krümmung des Auswurfkrümmers (10) nach vertikal unten weist, und einer Außerbetriebsstellung drehbewegbar ist, in der der Innenradius der Krümmung des Auswurfkrümmers (10) um 90 Grad gedreht in die Horizontale weist.

2. Erntemaschine (1) gemäß Anspruch 1, wobei die Erntemaschine (1) einen Drehkranz (5) aufweist, mit dem das eine Längsende des Auswurfkrümmers (10) verbunden ist, und wobei der Drehkranz (5) an der Oberseite der Erntemaschine (1) so angeordnet ist, dass er die vertikale Drehachse (A1) für den Auswurfkrümmer (10) bereitstellt.

3. Erntemaschine (1) gemäß Anspruch 2, wobei der Drehkranz (5) so eingerichtet ist, dass er außerdem die horizontale Drehachse (A2) für den Auswurfkrümmer (10) bereitstellt.

4. Erntemaschine (1) gemäß Anspruch 2, wobei der Auswurfkrümmer (10) einen Krümmerfuß (12) aufweist, welcher direkt an den Drehkranz (5) montiert ist, so dass der Krümmerfuß (12) um die durch den Drehkranz (5) bereitgestellte vertikale Drehachse (A1) drehbar ist, und in welchen ein Drehgelenk (13) integriert ist, das die horizontale Drehachse (A2) für den Auswurfkrümmer (10) bereitstellt.

5. Erntemaschine (1) gemäß einem der Ansprüche 1 bis 4, wobei der Auswurfkrümmer (10) ein längliches erstes Teilstück (11), welches eine Krümmung hat und welches um die vertikale Drehachse (A1) und um die horizontale Drehachse (A2) drehbar an der Erntemaschine (1) montiert ist, und ein längliches zweites Teilstück (15) aufweist, welches um eine Schwenkachse (A3) schwenkbar an einem der Erntemaschine (1) abgewandten Längsende des ersten Teilstücks (11) montiert ist, so dass das zweite Teilstück (15) zwischen einer ausgeklappten Stellung, in der sich das zweite Teilstück (15) als Längenfortsetzung des ersten Teilstücks (11) erstreckt, und einer eingeklappten Stellung verschwenkbar ist, in der das zweite Teilstück (15) längsseits neben dem ersten Teilstück (11) angeordnet ist.

6. Erntemaschine (1) gemäß Anspruch 5, wobei die Schwenkachse (A3) so ausgerichtet ist, dass das zweite Teilstück (15) zum Realisieren der eingeklappten Stellung auf die Krümmung des ersten Teilstücks (11) verschwenkbar ist.

7. Erntemaschine (1) gemäß Anspruch 6, wobei die Schwenkachse (A3) aufseiten eines Innenradius der Krümmung des ersten Teilstücks (11) angeordnet ist, so dass das zweite Teilstück (15) zum Realisieren der eingeklappten Stellung in den Innenradius der Krümmung des ersten Teilstücks (11) verschwenkbar ist.

8. Betriebsverfahren für eine Erntemaschine (1) gemäß einem der Ansprüche 1 bis 7, um den Auswurfkrümmer (10) aus der Betriebsstellung in eine Transportstellung zu verbringen, aufweisend:
Drehen des Auswurfkrümmers (10) um ein bestimmtes Ausmaß um die vertikale Drehachse (A1), so dass der Auswurfkrümmer (10) sich seiner Länge nach in Front-Heck-Richtung (FHR) der Erntemaschine (1) erstreckt, und
Drehen des Auswurfkrümmers (10) um 90 Grad um die horizontale Drehachse (A2), so dass der Innenradius der Krümmung des Auswurfkrümmers (10) in die Horizontale weist.

## Claims

1. A harvester (1) comprising an elongate discharge spout (10) mounted with a longitudinal end thereof to a top side of the harvester (1) in such a way that the discharge spout (10) is mounted at the one longitudinal end movably about a vertical axis of rotation (A1) and about a horizontal axis, wherein the discharge spout (10) by rotation about the vertical axis of rotation (A1) can be oriented in such a way so that the discharge spout (10) extends in respect of its length in a front-rear direction (FHR) of the harvester (1), wherein the one longitudinal end of the discharge spout (10) is mounted to the top side of the harvester (1) in such a way that the discharge spout (10) is mounted rotatably about a horizontal axis of rotation (A2) extending in a longitudinal direction (LR) of the discharge spout (10)
**characterised in that**
the discharge spout (10) has a curvature and is rotatable about the horizontal axis of rotation (A2) between an operative position in which an inner radius of the curvature of the discharge spout (10) faces vertically downwardly and an inoperative position in which the inner radius of the curvature of the discharge spout (10) is turned through 90 degrees into the horizontal direction.

2. A harvester (1) according to claim 1 wherein the harvester (1) has a turntable (5) to which the one longitudinal end of the discharge spout (10) is connected, and wherein the turntable (5) is arranged at the top side of the harvester (1) in such a way that it provides the vertical axis of rotation (A1) for the discharge spout (10).

3. A harvester (1) according to claim 2 wherein the turntable (5) is so adapted that it also provides the horizontal axis of rotation (A2) for the discharge spout (10).

4. A harvester (1) according to claim 2 wherein the discharge spout (10) has a spout foot (12) which is mounted directly to the turntable (5) in such a way that the spout foot (12) is rotatable about the vertical axis of rotation (A1) provided by the turntable (5), and into which a pivot joint (13) is integrated, which provides the horizontal axis of rotation (A2) for the discharge spout (10).

5. A harvester (1) according to one of claims 1 to 4 wherein the discharge spout (10) has an elongate first portion (11) which has a curvature and is mounted to the harvester (1) rotatably about the vertical axis of rotation (A1) and about the horizontal axis of rotation (A2), and an elongate second portion (15) which is mounted pivotally about a pivot axis (A3) to a longitudinal end of the first portion (11), that faces away from the harvester (1), so that the second portion (15) is pivotable between a folded-out position in which the second portion (15) extends as a length extension of the first portion (11) and a retracted position in which the second portion (15) is arranged longitudinally beside the first portion (11).

6. A harvester (1) according to claim 5 wherein the pivot axis (A3) is so oriented that the second portion (15) is pivotable on to the curvature of the first portion (11) to implement the retracted position.

7. A harvester (1) according to claim 6 wherein the pivot axis (A3) is disposed on an inner radius of the curvature of the first portion (11) in such a way that the second portion (15) is pivotable into the inner radius of the curvature of the first portion (11) for implementing the retracted position.

8. A method of operating a harvester (1) according to one of claims 1 to 7 for moving the discharge spout (10) from the operative position into a transport position, comprising:
rotating the discharge spout (10) by a given amount about the vertical axis of rotation (A1) in such a way that the discharge spout (10) extends in respect of its length in the front-rear direction (FHR) of the harvester (1), and
rotating the discharge spout (90) through90 degrees about the horizontal axis of rotation (A2) so that the inner radius of the curvature of the discharge spout (10) faces in the horizontal direction.

## Revendications

1. Machine de récolte (1) comprenant une goulotte allongée (10) qui est montée par une extrémité longitudinale de celle-ci sur un dessus de la machine de récolte (1), de façon que la goulotte (10) soit montée mobile, au niveau de ladite extrémité longitudinale, autour d'un axe de rotation vertical (A1) et autour d'un axe horizontal, la goulotte (10) étant orientable par rotation autour de l'axe de rotation vertical (A1) de façon que la goulotte (10) s'étende sur sa longueur dans une direction avant-arrière (FHR) de la machine de récolte (1), ladite extrémité longitudinale de la goulotte (10) étant montée sur le dessus de la machine de récolte (1) de façon que la goulotte (10) soit montée à rotation autour d'un axe de rotation horizontal (A2) s'étendant dans une direction longitudinale (LR) de la goulotte (10), **caractérisée en ce que** la goulotte (10) présente une courbure et est déplaçable en rotation autour de l'axe de rotation horizontal (A2) entre une position en service, dans laquelle un rayon intérieur de la courbure de la goulotte (10) est tourné verticalement vers le bas, et une position hors service dans laquelle le rayon intérieur de la courbure de la goulotte (10) est tourné de 90 degrés à l'horizontale.

2. Machine de récolte (1) selon la revendication 1, la machine de récolte (1) comportant une couronne tournante (5) à laquelle ladite extrémité longitudinale de la goulotte (10) est reliée, et la couronne tournante (5) étant disposée sur le dessus de la machine de récolte (1) de façon à fournir l'axe de rotation vertical (A1) pour la goulotte (10).

3. Machine de récolte (1) selon la revendication 2, la couronne tournante (5) étant agencée de façon à fournir en outre l'axe de rotation horizontal (A2) pour la goulotte (10).

4. Machine de récolte (1) selon la revendication 2, la goulotte (10) comportant un pied de goulotte (12) qui est monté directement sur la couronne tournante (5), de façon que le pied de goulotte (12) puisse tourner autour de l'axe de rotation vertical (A1) fourni par la couronne tournante (5), et dans lequel est intégrée une articulation tournante (13) qui fournit l'axe de rotation horizontal (A2) pour la goulotte (10).

5. Machine de récolte (1) selon une des revendications 1 à 4, la goulotte (10) comportant un premier élément partiel allongé (11), qui a une courbure et qui est monté à rotation sur la machine de récolte (1) autour de l'axe de rotation vertical (A1) et autour de l'axe de rotation horizontal (A2), et un second élément partiel allongé (15), qui est monté pivotant autour d'un axe de pivotement (A3) à une extrémité longitudinale du premier élément partiel (11) opposée à la machine de récolte (1), de sorte que le second élément partiel (15) est pivotant entre une position dépliée, dans laquelle le second élément partiel (15) s'étend comme un prolongement longitudinal du premier élément partiel (11), et une position repliée, dans laquelle le second élément partiel (15) est disposé le long du premier élément partiel (11).

6. Machine de récolte (1) selon la revendication 5, l'axe de pivotement (A3) étant orienté de façon que le second élément partiel (15) soit pivotant vers la courbure du premier élément partiel (11) pour réaliser la position repliée.

7. Machine de récolte (1) selon la revendication 6, l'axe de pivotement (A3) étant disposé du côté d'un rayon intérieur de la courbure du premier élément partiel (11), de façon que le second élément partiel (15) soit pivotant vers le rayon intérieur de la courbure du premier élément partiel (11) pour réaliser la position repliée.

8. Procédé de fonctionnement pour une machine de récolte (1) selon une des revendications 1 à 7, pour transférer la goulotte (10) depuis la position en service vers une position de transport, consistant à :
tourner la goulotte (10) d'un certain degré autour de l'axe de rotation vertical (A1), de façon que la goulotte (10) s'étende sur sa longueur dans la direction avant-arrière (FHR) de la machine de récolte (1), et à
tourner la goulotte (10) de 90 degrés autour de l'axe de rotation horizontal (A2), de façon que le rayon intérieur de la courbure de la goulotte (10) soit à l'horizontale.
